**Europäisches Patentamt**

**European Patent Office**

**Office européen des brevets**

(19)

(11) Veröffentlichungsnummer: **0 135 724**
**B1**

(12) # EUROPÄISCHE PATENTSCHRIFT

(45) Veröffentlichungstag der Patentschrift:
**10.12.86**

(51) Int. Cl.⁴: **A 01 D 45/02**, A 01 D 45/00

(21) Anmeldenummer: **84109130.9**

(22) Anmeldetag: **28.06.82**

(60) Veröffentlichungsnummer der früheren Anmeldung
nach Art. 76 EPÜ: **0069898**

(54) **Mehrreihige Erntemaschine, insbesondere für Mais.**

(30) Priorität: **10.07.81 DE 3127388**

(43) Veröffentlichungstag der Anmeldung:
**03.04.85 Patentblatt 85/14**

(45) Bekanntmachung des Hinweises auf die Patenterteilung:
**10.12.86 Patentblatt 86/50**

(84) Benannte Vertragsstaaten:
**AT CH DE FR LI**

(56) Entgegenhaltungen:
**EP - A - 0 069 898**
**DE - A - 2 612 857**
**DE - A - 2 900 552**
**DE - A - 2 900 554**
**FR - A - 2 408 293**

(73) Patentinhaber: **Alois Pöttinger Maschinenfabrik GmbH,
A-4710 Grieskirchen (AT)**

(72) Erfinder: **Wassermaier, Hubert,
Schaunbergerstrasse 11, A-4701 Bad Schallerbach (AT)**

(74) Vertreter: **Dupal, Helmut, Dipl-Ing., Jägerweg 12,
A-4702 Wallern (AT)**

## Beschreibung

Die Erfindung betrifft eine mehrreihige Erntemaschine für stengeliges Halmgut, insbesondere für Mais, mit mehreren von Halmteilern gebildeten Aufnahmespalten, in denen abgabeseitig je eine Aufnahmetrommel vorgesehen ist, die wenigstens zwei übereinander angeordnete, mit Mitnehmern ausgerüstete Aufnahmescheiben sowie eine untere Schneideinrichtung, bestehend aus einem rotierenden Messer an der Aufnahmetrommel und einem, mit diesem zusammenwirkenden, feststehenden Gegenmesser für das Halmgut haben und die paarweise gegensinnig rotierend, das erfasste und abgeschnittene Halmgut aus zwei nebeneinanderliegenden Aufnahmespalten zusammenführen zu zwei nachgeschalteten, aufrechtstehenden Einzugswalzen, die zwischen sich einen Einzugsspalt bilden.

Bei einer zweireihigen Erntemaschine dieser Bauart tragen die Aufnahmetrommel zwei obere, voneinander beabstandete Aufnahmescheiben sowie einen unteren Messerstern, der zusammen mit einem Gegenmesser die Pflanzen kurz über dem Boden abtrennt. Die beiden Aufnahmescheiben dienen zum Erfassen und Fördern der abgetrennten Pflanzen, wobei die Mitnehmer der unteren Aufnahmescheibe geringere Abstände voneinander aufweisen als die Mitnehmer der oberen Aufnahmescheibe; das hat den Zweck, dass die untere Aufnahmescheibe vor allem die Stengel sicher erfasst und fördert, während die obere Aufnahmescheibe mehr zur Führung der Stengel dient. An der der Fahrtrichtung abgewandten Seite übergibt jede Aufnahmetrommel das Halmgut an die nachgeschaltete Einzugswalze, die das Halmgut erfasst, worauf dieses durch den Einzugsspalt zwischen den beiden Einzugswalzen hindurch in eine Einzugsvorrichtung eines Häckslers gelangt.

Aus der DE-A1 29 00552 ist ein mehrreihiger Maishäcksler bekannt geworden, bei dem für jede Erntereihe eine Leitvorrichtung mit jeweils einem Aufnahmerad vorgesehen ist, wobei das Erntegut zweier Aufnahmeräder jeweils zusammengeführt und gemeinsam einer Weiterführungseinrichtung zugeleitet wird. Jedes Aufnahmerad ist mit einer Schneideinrichtung versehen, die aus einer, mit dem Aufnahmerad mitlaufenden Schneidscheibe und einem Trennmesser besteht, das gegen die Fahrtrichtung der Maschine und gegen die Umlaufrichtung der Schneidscheibe angestellt ist.

Diese Einrichtung hat den Nachteil, dass die Schnittwinkel über die wirksame Schneide des Trennmessers sich nicht oder nur ungenügend ändern, so dass beim Stumpfwerden bestimmter Schneidenteile die Schnittqualität sehr stark zurückgeht und besonders bei zähem Stengelmaterial und Unterwuchs zu Schwierigkeiten führt.

Weiters ist aus der DE-A1 29 00 554 ein Maishäcksler bekannt geworden, bei dem die Anordnung der Aufnahmeräder und der Einzugsreihen von der vorgenannten Druckschrift verschieden ist, bei dem aber die Schneideinrichtung der Aufnahmeräder identisch gelöst ist, so dass insofern das oben Angeführte gleichermassen gilt.

Schliesslich ist noch aus der DE-A1 26 12 857 eine Anordnung bekannt geworden, bei der zwei zahnartig ineinandergreifende, rotierend angetriebene Mitnehmersterne zum Erfassen und Fördern von Pflanzenstengeln vorgesehen sind. Unterhalb der Mitnehmer sind auf den Wellen der Mitnehmersterne je drei Messer angebracht, die von beiden Seiten eine nach vorne U-förmig geöffnete Gegenschneide überstreichen und dabei die Pflanzenstengel abtrennen. Die Gegenschneide weist symmetrisch schwach zusammenlaufende Flanken und einen senkrecht zur Förderrichtung verlaufenden Steg auf.

Diese Anordnung ist aber an die Verwendung von Mitnehmern und Messern von aufeinander abgestimmter Form und Anordnung gebunden und an die Anordnung zweier Mitnehmermesserkreisel beiderseits der Gegenschneide.

Bei Weglassen eines Mitnehmer- und Messersternes ergäbe sich besonders bei Unterwuchs oder zähem Blatt und Stengel ein ungenügendes Abschneiden, weil alle Schnitte stets unter dem gleichen Winkel erfolgen und im Endbereich der Schnittzone Gegenmesser und Schneidkanten der Klingen zuerst stumpf werden.

Nachteilig ist bei dieser Anordnung, dass die Gegenschneide bei Stumpfwerden eines Teiles der Gegenschneide, insgesamt nicht mehr verwendbar ist und ersetzt oder nachgeschliffen werden muss, weil nicht vollständig abgetrennte Pflanzenstengel zu schweren Betriebsstörungen führen.

Diese Anordnung ist daher mit nur einem Mitnehmer-Messerrad nicht anwendbar und für einfache Anordnungen ungeeignet.

Aufgabe der Erfindung ist es eine Anordnung zu finden bei der ein Mitnehmer-Messerrad mit einer Gegenschneide störungsfrei zusammenarbeiten kann und bei der eine lange, störungsfreie Gebrauchszeit der Gegenschneide erreichbar ist.

Diese Aufgabe wird bei einer Maschine der gattungsgemässen Art durch die Merkmale des kennzeichnenden Teiles des Hauptanspruches gelöst.

Diese Aufgabe ist durch die im kennzeichnenden Teil enthaltenen Merkmale gelöst.

Bei dieser Lösung hat das Doppelmesser eine flache Schneidkante, die beim Schneidvorgang mit der Basis der U-förmigen Schneidkante des Gegenmessers einen nach aussen offenen Winkel bildet, und eine steile Schneidkante, die beim Schneidvorgang mit der Basis einen nach innen offenen Winkel bildet. Damit wird erreicht, dass das Halmgut immer von zwei verschiedenen Seiten durch je einen ziehenden Schnitt sicher abgetrennt wird, wodurch verhindert wird, dass nur teilweise abgetrennte Stengel, die über nicht durchtrennte Fasern mit dem unteren Stengelende verbunden bleiben, Wurzelwerk, daran anhängendes Erdreich und Unkraut mitreissen, das so in den Einzugsspalt zwischen den beiden Einzugswalzen gerät. Ein weiterer Vorteil besteht darin, dass aufgrund des ziehenden Schnittes keine punktförmige Beanspruchung der Schneidkanten an immer gleichbleibenden Stellen erfolgt, sondern eine gleichmässige Beanspruchung, die eine längere Standzeit der Messer zur Folge hat.

In der Praxis hat es sich als vorteilhaft erwiesen, wenn der Winkel α etwa 30°, der Winkel β etwa 37° und der Winkel γ etwa 22° betragen.

Nach einem weiteren Merkmal der Erfindung ist die Lage des Gegenmessers zum Doppelmesser einstellbar. Hierfür ist es günstig, wenn das Gegenmesser unter Zwischenschaltung von Federelementen auf einem Messerträger verschraubt ist.

Mit dieser Massnahme wird eine stets einwandfreie Schneidwirkung der Schneideinrichtung sichergestellt.

Es ist ferner von Vorteil, wenn drei Doppelmesser zu einem rotierenden Messerstern vereinigt sind, so dass bei jeder Rotation des Messersterns sechs abwechselnde Schnitte erfolgen.

Die Erfindung ist nachstehend an einem Ausführungsbeispiel erläutert, das in der Zeichnung dargestellt ist.

Es zeigen:

Figur 1 eine schematische Seitenansicht einer Erntemaschine gemäss der Erfindung,

Figur 2 ausschnittsweise und in vergrössertem Massstab eine Seitenansicht einer Aufnahmetrommel mit Abstreifer und einer Einzugswalze,

Figur 3 einen Schnitt entlang der Linie V-V der Fig. 4 einer Aufnahmetrommel mit Schneideinrichtung in vergrössertem Massstab,

Figur 4 eine Draufsicht der Aufnahmetrommel mit Schneideinrichtung der Fig. 3,

Figur 5 eine der Fig. 4 entsprechende Darstellung beim Schneidvorgang einer flachen Schneidkante und

Figur 6 eine der Fig. 4 entsprechende Darstellung beim Schneidvorgang der steilen Schneidkante.

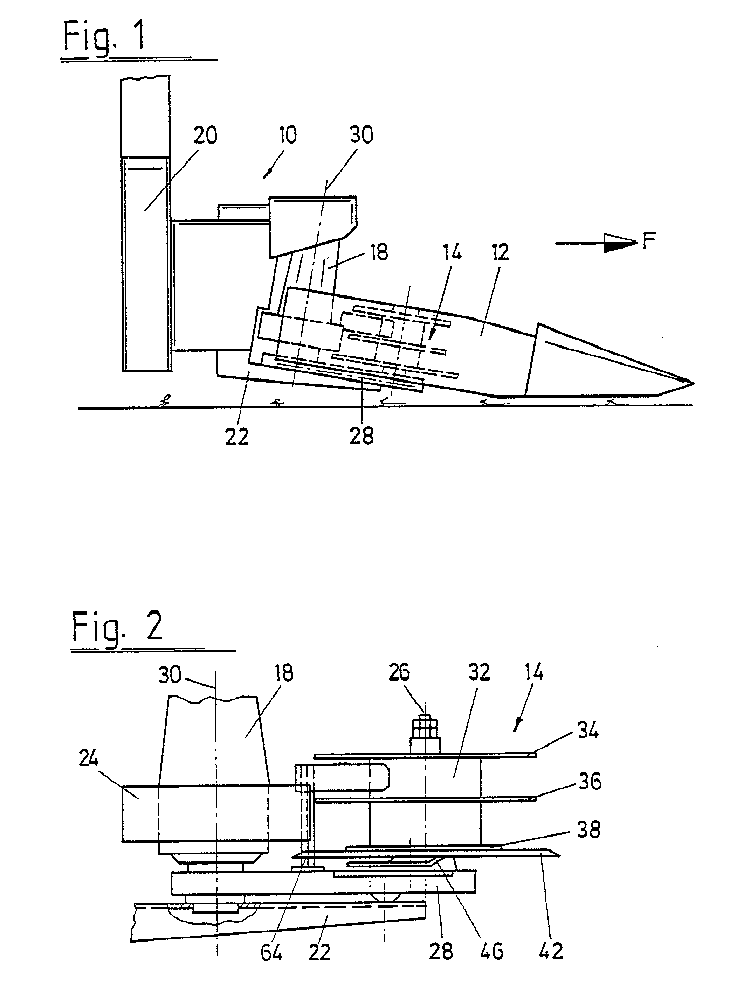

In Fig. 1 ist schematisch die Seitenansicht einer zweireihigen Erntemaschine 10 für Mais gezeigt, die in bekannter Weise seitlich an einen Schlepper gekoppelt werden kann. Die Erntemaschine 10 hat drei in Fahrtrichtung F spitz zulaufende Halmteiler 12, wodurch zwei Aufnahmespalten gebildet werden. In jedem Aufnahmespalt ist abgabeseitig, d.h. in Fahrtrichtung F hinten eine Aufnahmetrommel 14 angeordnet, die in noch zu beschreibender Weise die Pflanzen vom Boden abtrennt und zu dem Einzugsspalt zwischen zwei aufrechtstehenden Einzugswalzen 18 fördert, welche das Erntegut in eine Häckseleinrichtung 20 weiterleiten.

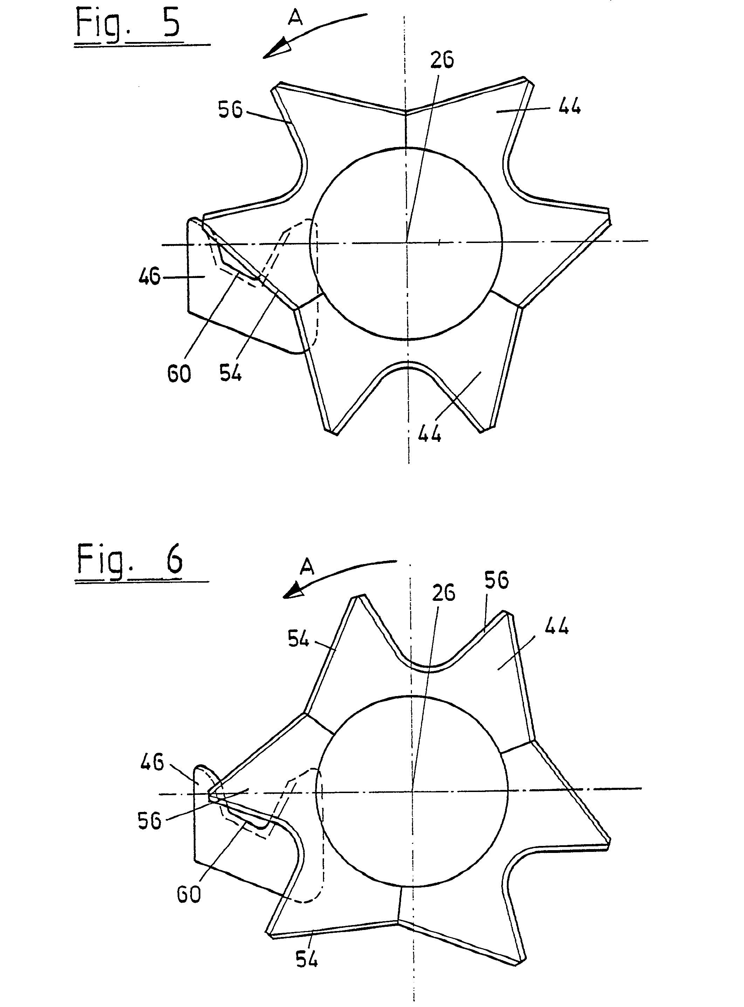

Die beiden Einzugswalzen 18 sind auf einem Grundrahmen 22 der Erntemaschine 10 mit festem Abstand zueinander und gegensinnig antreibbar gelagert; die Drehrichtung ist in Fig. 4 durch Pfeile angedeutet. An der Aussenseite weisen die beiden konischen Einzugswalzen 18 schlaufenartige Mitnehmer 24 auf, wobei die Mitnehmer der einen Einzugswalze bei der Drehung zwischen zwei Mitnehmer der gegenüberliegenden Einzugswalze eingreifen und so das geschnittene und von den Aufnahme – trommeln 14 zugeführte Erntegut durch den Einzugsspalt zur Häckseleinrichtung 20 in Zusammenwirken mit den Aufnahmetrommeln 14 weiterfördern.

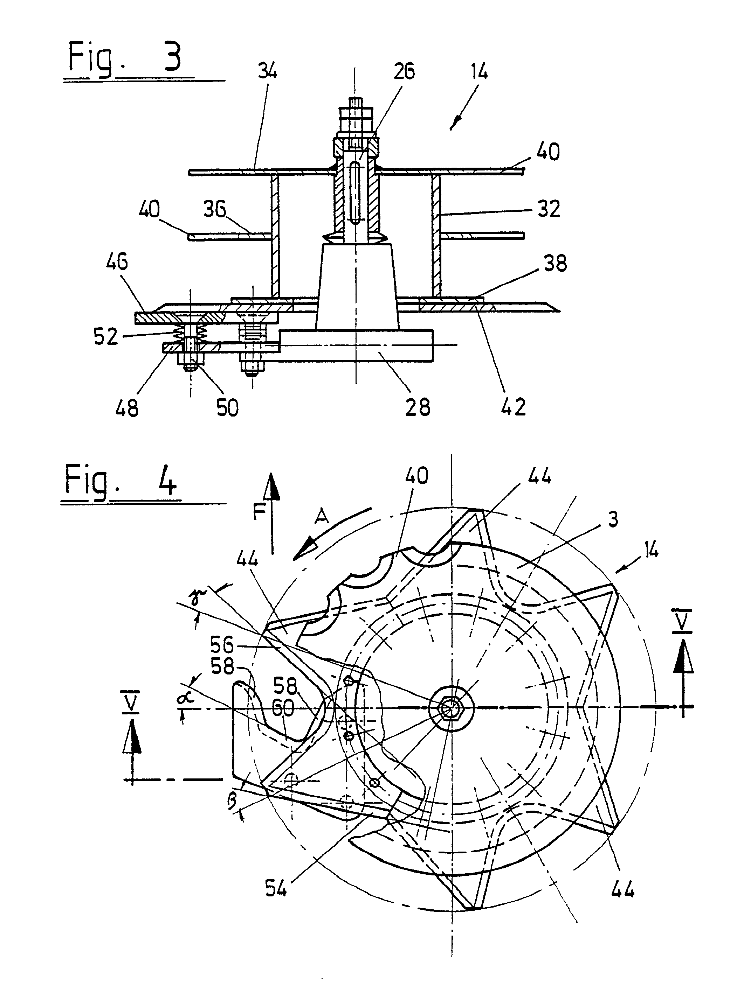

Die beiden Aufnahmetrommel 14 sind, wie vor allem Fig. 3 zeigt, auf je einer Welle 26 befestigt, die in einem Getriebegehäuse 28 gelagert ist. Jedes der beiden Getriebegehäuse 28 ist um die Drehachse 30 der zugeordneten Einzugswalze 18 verschwenkbar gelagert, so dass der gegenseitige Abstand der beiden Aufnahmetrommeln 14 an den jeweiligen Reihenabstand des Erntegutes angepasst und anschliessend festgestellt werden kann. In den beiden Getriebegehäusen 28 ist das Getriebe für den von der zugeordneten Einzugswalze 18 abgeleiteten Antrieb der Aufnahmetrommel 14 untergebracht; das Getriebe kann als Zahnradgetriebe oder als Ketten- oder Riementrieb ausgebildet sein.

Auf der Trommel 32 jeder Aufnahmetrommel 14 sind axial übereinander und mit Abstand zueinander drei Aufnahmescheiben 34, 36, 38 befestigt.

Die obere Aufnahmescheibe 34 und die mittlere Aufnahmescheibe 36 weisen an ihrem Aussenumfang Mitnehmer 40 auf, wobei der Abstand der Mitnehmer 40 der mittleren Aufnahmescheibe 36 geringer ist als bei der oberen Aufnahmescheibe 34. Die mittlere Aufnahmescheibe 36 dient vor allem dazu, die abgeschnittenen Stengel sicher zu erfassen und in Richtung auf die Einzugswalzen 18 zu fördern, während die obere Aufnahmescheibe 34 die Stengel führen soll.

An der unteren Aufnahmescheibe 38 ist ein Messerstern 42 befestigt, der, wie vor allem Fig. 4 zeigt, aus drei Doppelmessern 44 zusammengesetzt ist. Jedem der beiden Messersterne 42 ist ein Gegenmesser 46 zugeordnet, das auf einem Messerträger 48 durch drei Schrauben 50 und unter Zwischenschaltung von Tellerfedern 52 befestigt ist. Die Befestigung mittels drei Schrauben verhindert unerwünschte Kippbewegungen des Gegenmessers 46. Der Messerträger 48 seinerseits ist am Getriebegehäuse 28 verschraubt. Die beiden Gegenmesser 46 sind an den voneinander wegweisenden Aussenseiten der beiden Aufnahmetrommeln 14 angeordnet.

Jedes Doppelmesser 44, das in Draufsicht etwa die Form von zwei nebeneinanderliegenden, spiegelsymmetrischen Dreiecken aufweist, hat eine flache Schneidkante 54 und eine steile Schneidkante 56. Die flache Schneidkante 54 bildet dabei mit der Radialen der Aufnahmetrommel 14 einen Winkel β von etwa 37°, während die steile Schneidkante 56 mit der Radialen einen Winkel γ von etwa 22° einschliesst. Das feststehende Gegenmesser 46 hat eine im wesentlichen U-förmige Schneidkante, die in Fahrtrichtung F der Erntemaschine 10 und gegen die Drehrichtung (Pfeil A in Fig. 4) der Doppelmesser 44 offen ist. Die beiden U-Schenkel 58 werden von einer ebenfalls als Schneidkante dienenden Basis 60 verbunden, die zur Radialen um einen Winkel α bezüglich der Fahrtrichtung F von aussen nach innen hinten geneigt verläuft; der Winkel α beträgt beim Ausführungsbeispiel etwa 30°.

Da die Grösse des Winkels α der Basis 60 zwischen der Grösse der Winkel β und γ der beiden Schneidkanten 54 und 56 liegt, bildet, wie Fig. 5 zeigt, die flache Schneidkante 54 des Doppelmessers 44 im Augenblick des Schneidvorganges mit der Basis 60 des feststehenden Gegenmessers 46 einen nach aussen offenen Winkel, während die steile Schneidkante 56 bei der Drehung des Messersternes 42 in Richtung A anschliessend mit der Basis 60 einen nach innen offenen Winkel bildet. Damit wird erreicht, dass die Pflanzenstengel an zwei verschiedenen Seiten der Schneidkante in einem ziehenden Schnitt vom Boden getrennt werden, und zwar abwechselnd an dem äusseren und an dem inneren Ende der Basis 60 der Schneidkante des Gegenmessers 46. Auf diese Weise ist eine gleichmässige Abnutzung der Schneidkanten herbeigeführt, und ausserdem ist sichergestellt, dass möglicherweise durch die flache Schneidkante 54 nicht vollständig durchtrennte Halme durch die nachfolgende, steile Schneidkante 56 in der anderen Schnittrichtung doch noch duchtrennt werden.

Aufgrund der spiegelsymmetrischen Form der Doppelmesser 44 ist es möglich, die Doppelmesser der beiden gegensinnig rotierenden Aufnahmetrommeln 14 nach einer gewissen Einsatzzeit gegeneinander auszutauschen, so dass die beiden noch unbenutzten und damit scharfen Schneidkanten jedes Doppelmessers 44 zum Einsatz kommen. Die Standzeit der Messer wird dadurch verdoppelt.

Zur Verringerung des Verschleisses und zur Verbesserung der Schneidwirkung sind alle Schneidkanten mit einer Hartmetallbeschichtung versehen. Die Aufteilung des Messersterns 42 in drei Doppelmesser 44 beugt der Gefahr eines Verziehens, insbesondere bei der Herstellung und dem Montieren vor.

Die Befestigung der beiden Gegenmesser 46 auf den Messerträgern 48 mit Hilfe von Schrauben 50 unter Zwischenschaltung der Tellerfedern 52 hat den Vorteil, dass zwischen beiden ein Abstand bleibt, der zur Einstellung zur Verfügung steht. Selbstverständlich ist es auch möglich, anstelle der Tellerfedern 52 Federblöcke oder andere Federelemente zu verwenden.

### Patentansprüche

1. Mehrreihige Erntemaschine (10) für stengeliges Halmgut, insbesondere für Mais, mit mehreren, von Halmteilern gebildeten Aufnahmespalten (12), in denen abgabeseitig je eine Aufnahmetrommel (14) vorgesehen ist, die wenigstens zwei übereinander angeordnete, mit Mitnehmern (40) ausgerüstete Aufnahmescheiben (34, 36, 38), sowie eine untere Schneideinrichtung bestehend aus einem rotierenden Messer an der Aufnahmetrommel (14) und einem, mit diesem zusammenwirkenden, feststehenden Gegenmesser für das Halmgut haben und die paarweise gegensinnig rotierend, das erfasste und abgeschnittene Halmgut aus zwei nebeneinanderliegenden Aufnahmespalten (12) zusammenführen zu zwei nachgeschalteten, aufrechtstehenden Einzugswalzen (18), die zwischen sich einen Einzugsspalt (16) bilden, dadurch gekennzeichnet, dass die Schneideinrichtung aus wenigstens einem rotierenden Doppelmesser (44) mit zwei Schneidkanten (54, 56) und einem feststehenden Gegenmesser (46) mit im wesentlichen U-förmiger, in Fahrtrichtung der Erntemaschine (10) und gegen die Drehrichtung der Doppelmesser (44) offener Schneidkante besteht, deren, die beiden U-Schenkel (58) verbindende Basis (60) zur Radialen, der die Schneideinrichtung tragenden Aufnahmetrommel (14) geneigt und bezüglich der Fahrtrichtung (F) von aussen nach innen hinten in einem Winkel α schräg verläuft, und dass die beiden Schneidkanten (54, 56) des Doppelmessers (44) mit der Radialen der Aufnahmetrommel (14) zwei unterschiedliche Winkel β und γ einschliessen, wobei β > α > γ ist.

2. Erntemaschine nach Anspruch 1, dadurch gekennzeichnet, dass der Winkel α etwa 30°, der Winkel β etwa 37° und der Winkel γ etwa 22° betragen.

3. Erntemaschine nach Anspruch 1 oder 2, dadurch gekennzeichnet, dass die Lage des Gegenmessers (46) zum Doppelmesser (44) einstellbar ist.

4. Erntemaschine nach Anspruch 3, dadurch gekennzeichnet, dass das Gegenmesser (46) unter Zwischenschaltung von Federelementen (52) auf einem Messerträger (48) verschraubt ist.

5. Erntemaschine nach einem der Ansprüche 1 bis 4, dadurch gekennzeichnet, dass drei Doppelmesser (44) zu einem rotierenden Messerstern (42) vereinigt sind.

6. Erntemaschine nach einem der Ansprüche 1 bis 5, dadurch gekennzeichnet, dass jedes Doppelmesser (44) in Draufsicht im wesentlichen die Form von zwei nebeneinanderliegenden, zu einer Radialen der Aufnahmetrommel (14) spiegelsymmetrischen Dreiecken mit je einer flachen (54) und einer steilen (56) Schneidkante hat.

### Claims

1. A multi-row harvester (10) for stalked cereal products, especially maize, with several pick-up spaces (12) formed by dividers and in each of which a pick-up drum (14) is provided on the discharge side, which drums (14) have at least two superposed pick-up disks (34, 36, 38) provided with engaging pieces (40) and a lower cutting device for the cereal product comprising a rotating knife on the pick-up drum (14) and a stationary counterknife cooperating with the rotating knife, and which, rotating in pairs in opposing directions, convey together the picked-up and cut-off cereal product from two adjacent pick-up spaces (12) to two upright feed rollers (18) located downstream, which rollers (18) form between them a feed gap (16), characterized in that the cutting device comprises at least one rotating double knife (44) with two cutting edges (54, 56) and a stationary counterknife (46) with a substantially U-shaped cutting edge open in the direction of travel of the harvester (10) and against the rotational direction of the double knife (44), the base (60) connecting

the two U-legs (58) of which cutting edge is inclined in relation to the radius of the cutting device-carrying pick-up drum (14) at an angle α and runs slopingly inwardly and rearwardly relative to the direction of travel (F), and that the two cutting edges (54, 56) of the double knife (44) form with the radius of the pick-up drum (14) two differing angles β and γ, wherein β > α > γ.

2. A harvester according to claim 1, characterized in that the angle α amounts to approximately 30°, the angle β to approximately 37° and the angle γ to approximately 22°.

3. A harvester according to claim 1 or claim 2, characterized in that the position of the counterknife (46) is adjustable in relation to the double knife (44).

4. A harvester according to claim 3, characterized in that the counterknife (46) is screwed onto a knife holder (48) with interposed spring members (52).

5. A harvester according to any one of claims 1 to 4, characterized in that three double knives (44) are assembled to form a rotating star (42).

6. A harvester according to any one of claims 1 to 5, characterized in that in plan view each double knife (44) has substantially the shape of two adjacent triangles which are mirror images about a radius of the pick-up drum (14) and each comprise one flat (54) and one steep (56) cutting edge.

## Revendications

1. Récolteuse (10) à plusieurs rangs pour céréales à tiges, en particulier pour le maïs, comprenant plusieurs intervalles de réception (12) formés par des diviseurs de chaumes et dans lesquels un tambour récepteur (14) est à chaque fois prévu du côté délivrance, les tambours présentant au moins deux disques récepteurs superposés (34, 36, 38) équipés d'organes d'entraînement (40) ainsi qu'un dispositif inférieur de sectionnement des céréales comprenant une lame rotative sur le tambour récepteur (14) et une contre-lame fixe coopérant avec cette dernière, les tambours tournant par paires dans des sens opposés et dirigeant conjointement les céréales sectionnées et saisies, à partir de deux intervalles de réception juxtaposés (12), vers deux cylindres verticaux d'enfournement (18) installés en aval et délimitant entre eux un interstice d'enfournement (16), caractérisée par le fait que le dispositif de sectionnement comprend au moins une lame double rotative (44) à deux tranchants (54, 56) et une contre-lame fixe (46) munie d'un tranchant sensiblement configuré en U, ouvert dans la direction du déplacement de la récolteuse (10) et à l'opposé du sens de rotation des lames doubles (44), et dont la base (60) reliant les deux branches (58) du U est inclinée par rapport au rayon du tambour récepteur (14) portant le dispositif de sectionnement, et s'étend à l'oblique vers l'arrière selon un angle α, de l'extérieur vers l'intérieur vis-à-vis de la direction (F) du déplacement; et par le fait que les deux tranchants (54, 56) de la lame double (44) forment deux angles différents β et γ avec le rayon du tambour récepteur (14), de façon que β > α > γ.

2. Récolteuse selon la revendication 1, caractérisée par le fait que les angles α, β et γ mesurent respectivement environ 30°, environ 37° et environ 22°.

3. Récolteuse selon la revendication 1 ou 2, caractérisée par le fait que la position de la contre-lame (46) est réglable par rapport à la lame double (44).

4. Récolteuse selon la revendication 3, caractérisée par le fait que la contre-lame (46) est boulonnée sur un porte-lame (48), avec interposition d'éléments élastiques (52).

5. Récolteuse selon l'une des revendications 1 à 4, caractérisée par le fait que trois lames doubles (44) sont rassemblées en un tourniquet de coupe rotatif (42).

6. Récolteuse selon l'une des revendications 1 à 5, caractérisée par le fait que chaque lame double (44) présente, en plan, sensiblement la forme de deux triangles juxtaposés spéculaires par rapport à un rayon du tambour récepteur (14), avec des tranchants respectivement aplati (54) et raide (56).

## Fig. 1

## Fig. 2

0 135 724

Fig. 3

Fig. 4

9

## Fig. 5

## Fig. 6